# FASCICULE DE BREVET EUROPEEN

(11) **EP 1 476 332 B1**
(45) Date de publication et mention de la délivrance du brevet: **11.06.2008**
(21) Numéro de dépôt: 03720636.4
(22) Date de dépôt: 21.02.2003
(51) Int. Cl.: B60R 21/26

(54) **DISPOSITIF GENERATEUR DE GAZ**
GASGENERATOR
GAS GENERATING DEVICE

(30) Priorité: 21.02.2002 FR 0202211
(43) Date de publication de la demande: 17.11.2004
(73) Titulaire: LIVBAG, 75017 Paris (FR)
(72) Inventeur: DUVACQUIER, Daniel, F-33300 Bordeaux (FR); PEROTTO, Christian, F-29500 Ergue-Gaberic (FR); LEBAUDY, Franck, F-29470 Loperhet (FR); ABAZIOU, Xavier, F-29800 Landerneau (FR)
(74) Mandataire: Bomer, Françoise Marie
(86) Numéro de dépôt international: PCT/FR2003/000587
(87) Numéro de publication internationale: WO 2003/070527

(56) Documents cités:
- WO-A-93/18942
- FR-A- 2 669 875
- US-A- 3 441 290
- US-A- 4 964 654

## Description

La présente invention se rapporte au domaine de la sécurité automobile et concerne plus particulièrement un générateur de gaz comportant un système de diffusion à poussée neutre.

Les générateurs de gaz utilisés en sécurité automobile ne doivent pas devenir de dangereux projectiles lorsqu'ils sont initiés alors qu'ils ne sont pas en service, c'est-à-dire lorsqu'ils sont manipulés, transportés ou stockés. Il est donc impératif de garantir un niveau de sécurité optimal lorsque ces générateurs sont hors de leur module. Ce niveau de sécurité peut être obtenu en utilisant un système de diffusion à poussée neutre. Cela consiste par exemple sur des générateurs de gaz de forme tubulaire à réaliser des sorties de gaz radiales équilibrées et réparties de sorte à ce que les forces générées lors de la libération des gaz s'annulent. Le générateur sera ainsi à poussée neutre et ne présentera aucun danger lorsqu'il est initié hors de son module. Toutefois, dans certains modules, pour obtenir un gonflage rapide du coussin, il est souvent préférable que les gaz pénètrent suivant un seul axe de poussée. Pour obtenir cet axe unique de poussée en direction du coussin, on ajoute souvent un diffuseur permettant de canaliser dans une seule direction les flux de gaz s'échappant des sorties radiales du générateur. La mise en place d'un diffuseur permet de conserver un générateur disposant d'un système de diffusion à poussée neutre. Cependant, l'efficacité de ce type de module est moindre par rapport à celle d'un module utilisant un générateur à sortie axiale, c'est-à-dire libérant les gaz suivant un seul axe en direction du coussin de protection.

Il est connu par le brevet WO 93/18942 un module comportant notamment un générateur de gaz fixé sur une structure spécifique et un coussin gonflable par les gaz fournis par ce générateur.

Le générateur décrit dans ce brevet comporte un réservoir de gaz sous-pression et une pluralité d'orifices de sortie arrangés et répartis de sorte à rendre le générateur à poussée neutre lorsqu'il n'est pas fixé sur sa structure. Le module comprend également des obturateurs pour obturer certains orifices de sortie du générateur afin de lui donner une configuration à poussée axiale lorsqu'il est attaché à sa structure. Dans le cas où par exemple le générateur comporte deux orifices diamétralement opposés, l'un étant orienté de sorte à pouvoir amener les gaz directement dans le coussin, l'autre orifice sera obturé de manière à donner au module une configuration à poussée axiale. Dans ce document, l'orifice utilisé pour le gonflage du sac est également utilisé pour donner une configuration à poussée neutre au dispositif lorsque celui-ci est initié alors qu'il n'est pas en service. Ce brevet WO 93/18942 propose également de fixer le générateur à l'aide des obturateurs. De cette façon, dès que le générateur devra être retiré de son module, il sera nécessaire de retirer les obturateurs et donc d'ouvrir tous les orifices radiaux. Ce générateur sera donc toujours dans une configuration à poussée neutre lorsqu'il est hors de son module. Les systèmes utilisés dans l'art antérieur utilisent une ou plusieurs pièces spécifiques afin d'obtenir une sortie axiale des gaz sur des générateurs normalement à poussée neutre lorsqu'ils sont hors de leur module. Ces pièces sont par exemple le diffuseur ou les obturateurs divulgués dans le brevet WO 93/18942, qui sert de base pour la présentation en deux parties de la revendication 1.

Un but de l'invention est de proposer un générateur de gaz à sortie axiale directe vers le coussin de protection, ne nécessitant pas pour cela l'utilisation d'une structure spécifique, ni d'obturateur ou diffuseur et présentant tout de même un système de diffusion à poussée neutre permettant de le rendre sans danger lorsqu'il est initié hors de son module.

Ce but est atteint par un dispositif générateur de gaz utilisé en sécurité automobile pour gonfler un coussin de protection, comprenant au moins une source de gaz pour gonfler le coussin de protection et au moins un orifice, dit premier orifice, de sortie de gaz vers le coussin de protection, ce dispositif étant caractérisé en ce qu'il comporte des moyens pour amener le gaz à traverser d'autres orifices de sortie des gaz, dits seconds orifices, lorsque le dispositif est initié alors qu'il n'est pas en service, ces seconds orifices étant répartis sur le dispositif de sorte à le rendre à poussée neutre lorsqu'il est initié alors qu'il n'est pas en service, le dispositif comportant également des moyens d'obturation de ces seconds orifices lorsque le dispositif est en service, de sorte que lorsque le dispositif est initié, le gaz passe par le premier orifice de sortie.

Dans un mode de réalisation, le dispositif comprend une première partie comprenant la source de gaz et une deuxième partie ayant la forme d'un tube cylindrique comprenant un embout sur lequel peut être raccordé le coussin de protection, ce tube comportant un canal central ayant un profil interne définissant une section d'écoulement du gaz, dans un sens d'écoulement donné, entre une extrémité dite extrémité amont, reliée à la source de gaz et une extrémité, dite extrémité aval, fermée constituant une section pleine extrême du tube, le premier orifice étant formé à travers cette section pleine et le tube comportant également une paroi latérale sur laquelle sont formés radialement les seconds orifices.

Selon un premier mode de réalisation, les moyens pour amener le gaz à traverser les seconds orifices lorsque le dispositif est initié alors qu'il n'est pas en service sont constitués par un profil interne d'écoulement particulier dans le tube, qui comporte, en amont des seconds orifices, en suivant le sens d'écoulement, une section d'écoulement décroissante jusqu'à une section d'écoulement minimale de diamètre donné non nul formant un rétrécissement, prolongée, sensiblement dans le même plan radial, par une section d'écoulement de diamètre supérieur au diamètre de la section minimale, elle-même prolongée par une section d'écoulement croissante, de sorte à former avec ce profil interne particulier, un système à effet Venturi, la différence entre les deux diamètres étant définie de sorte à ménager une ouverture vers un passage annulaire relié au premier orifice, ce premier orifice étant constitué par une tuyère dite axiale, orientée en direction du coussin de protection, formée dans la paroi latérale du tube et traversant à une de ses extrémités la section extrême du tube.

Selon une particularité du premier mode de réalisation, la section décroissante située en amont du rétrécissement est formée par un canal central d'une pièce, cette pièce ayant la forme d'un tronc de cône ouvert à ses deux extrémités et ayant une épaisseur déterminée variable, décroissante de son extrémité dite amont située du côté de l'extrémité amont du tube vers son extrémité aval située du côté de l'extrémité aval du tube, cette pièce présentant une paroi latérale, sur une partie de laquelle située à proximité de son extrémité amont est formé un méplat circulaire, en saillie, dont la surface est parallèle à la paroi interne du tube et fixée à celle-ci.

Selon un second mode de réalisation, les moyens pour amener le gaz vers les seconds orifices comprennent un déflecteur placé en vis-à-vis de l'entrée d'un conduit, cette entrée constituant une extrémité du conduit située à l'intérieur du tube, le conduit traversant à son autre extrémité dite sortie la section extrême du tube pour déboucher à l'extérieur du tube, le déflecteur comportant au moins une partie pleine placée en vis-à-vis de l'entrée du conduit, cette partie pleine étant formée ou située à une distance déterminée de l'entrée du conduit de sorte à laisser un espace entre la partie pleine et l'entrée du conduit, au moins un passage étant formé autour de la partie pleine du déflecteur, ce passage constituant une réduction de la section d'écoulement dans le tube entre l'amont et l'aval.

Selon une première variante de ce second mode de réalisation, le déflecteur comporte de part et d'autre de sa partie pleine, au moins deux orifices permettant le passage des gaz entre l'amont et l'aval du déflecteur.

Selon une particularité de cette première variante, la partie pleine du déflecteur est bombée en direction de l'amont permettant de former l'espace entre la partie pleine et l'entrée du conduit.

Selon une deuxième variante de ce second mode de réalisation, le déflecteur a une forme tronconique dont l'axe de symétrie est confondu avec l'axe du tube et avec l'axe du conduit, la section la plus grande de cette forme tronconique étant en vis-à-vis de l'entrée du conduit et de diamètre supérieur ou égal au diamètre du conduit à son entrée, et inférieur au diamètre interne du tube à cet endroit de sorte à former le passage entre l'amont et l'aval.

Selon une particularité de cette deuxième variante, l'entrée du conduit est évasée et le déflecteur présente des moyens d'accrochage sur le bord de l'entrée évasée du conduit.

Selon une particularité, le coussin de protection gonflable comporte une extrémité ouverte ayant son pourtour raccordé à l'embout, appliqué sur les seconds orifices et maintenu contre eux de sorte à former les moyens d'obturation des seconds orifices lorsque le dispositif est en service.

Selon une autre particularité, la liaison du coussin de protection sur l'embout, réalisée par l'intermédiaire d'un collier de serrage, est fusible, ce qui permet dans le cadre d'une prise en feu du dispositif, de libérer les seconds orifices et ainsi de conférer au dispositif une configuration à poussée neutre.

Selon une autre particularité, la source de gaz comporte un réservoir relié ou intégré au tube et contenant un gaz sous-pression.

Selon une autre particularité, la source de gaz comporte une chambre de combustion d'au moins un chargement pyrotechnique.

L'invention, avec ses caractéristiques et avantages ressortira plus clairement à la lecture de la description faite en référence aux dessins annexés dans lesquels :
- la figure 1A représente, en coupe longitudinale, un premier mode de réalisation d'une partie aval d'un générateur de forme tubulaire non en service ;
- la figure 1B représente en coupe longitudinale, la partie aval du générateur de gaz représentée en figure 1A, sur laquelle est raccordé le coussin de protection gonflable ;
- la figure 2A représente, en coupe longitudinale, un second mode de réalisation de la partie aval du générateur non en service ;
- la figure 2B représente, en coupe longitudinale, la partie aval du générateur représentée en figure 2A sur laquelle est raccordé le coussin de protection gonflable ;
- la figure 3A représente, en coupe longitudinale, la partie aval du générateur non en service dans une variante de réalisation du second mode de réalisation ;
- la figure 3B représente, en coupe longitudinale, la partie aval du générateur représentée en figura 3A sur laquelle est raccordé le coussin de protection.
- la figure 4 représente, en coupe longitudinale, un mode de réalisation dans lequel l'embout sur lequel est raccordé le coussin de protection est orienté à 90° par rapport à l'axe du tube

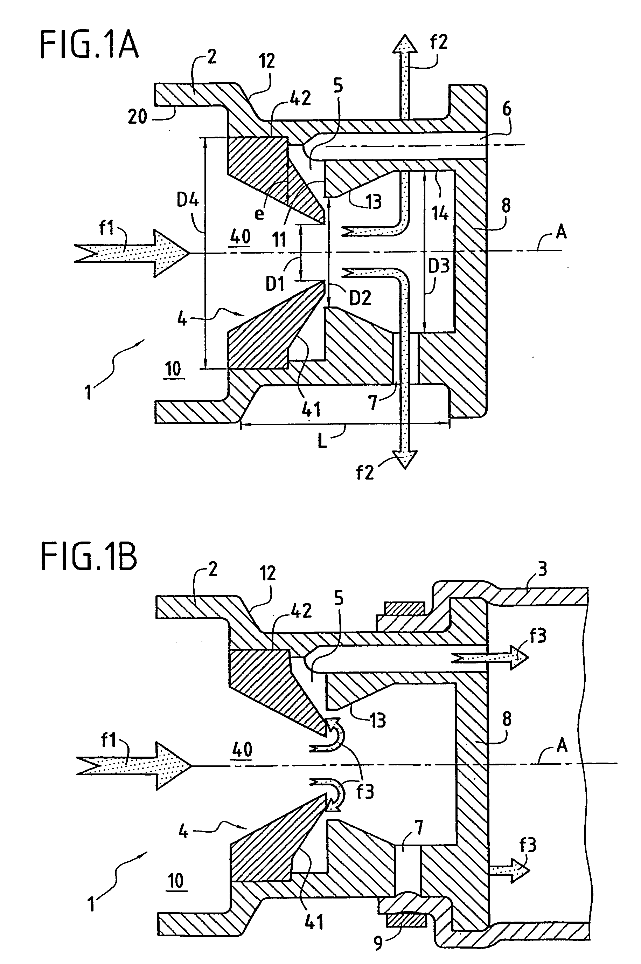

L'invention va à présent être décrite en liaison avec les figures 1A à 4.

Pour gonfler un coussin de protection des occupants d'un véhicule automobile, on utilise un générateur de gaz. Certains générateurs couramment utilisés sont dits à sortie axiale, ce qui signifie que les gaz sont envoyés dans le coussin de protection suivant un seul axe. L'axe tel que défini ici ne correspond donc pas à l'axe du générateur lorsque celui-ci est de forme tubulaire mais correspond à l'axe d'entrée des gaz dans le coussin de protection. D'autres générateurs sont dits à poussée neutre. Lorsque ces générateurs à poussée neutre ont une forme tubulaire, ils comprennent une pluralité d'orifices de sortie répartis sur une partie de la paroi latérale du tube de sorte à ce que les forces générées par la sortie des gaz s'annulent.

Les générateurs à sortie axiale peuvent devenir de dangereux projectiles s'ils sont initiés hors de leur module. Toutefois, ils sont très performants pour le gonflage de certains coussins.

L'invention consiste donc à utiliser un générateur à sortie axiale lorsqu'il est dans son module, c'est-à-dire lorsqu'il est raccordé sur le coussin, qui présente un système de diffusion à poussée neutre lui permettant d'être sans danger lorsqu'il est manipulé, stocké ou transporté.

L'invention peut être appliquée notamment sur des générateurs de forme tubulaire, présentant une source (non représentée) de gaz quelconque intégrée ou non au générateur. Ce générateur pourra donc disposer d'un réservoir de gaz sous-pression ou pourra utiliser la combustion d'un chargement pyrotechnique ou être de type hybride, c'est-à-dire disposant d'un réservoir de gaz sous-pression et d'une chambre de combustion d'un chargement pyrotechnique. Prenons par exemple un générateur de type hybride comportant plusieurs sources de gaz. L'invention se rapportant à l'évacuation des gaz hors du générateur, les figures annexées ne représentent que la partie d'un générateur proche de l'extrémité par laquelle les gaz sont évacués. Cette extrémité est dite extrémité aval.

Le générateur est de forme tubulaire fermée à son extrémité aval, par une section (8,108,208) du tube (1,101,201) dite extrême, le tube (1,101,201) ayant un axe (A) central et comportant une paroi (2,102,202) latérale. Le tube (1,101,201) présente un canal (10,110,210) central ayant un profil interne définissant une section d'écoulement perpendiculaire à l'axe (A) du tube (1,101,201).

Les gaz circulent dans le tube dans un sens d'écoulement défini par la flèche f.1 sur les figures annexées, entre une extrémité dite amont reliée à la source de gaz et l'extrémité aval du tube (1,101,201).

La partie du tube (1,101,201) représentée aux figures 1A à 3B présente à partir d'un plan radial déterminé, sur une longueur L déterminée, jusqu'à sa section extrême (8,108,208), une section différente réduite, réduisant ainsi la section d'écoulement du tube (1,101,201) et constituant un embout pour raccorder le coussin de protection. Lorsque le générateur est en service, comme représenté aux figures 1B, 2B et 3B, un coussin (3) de protection des occupants d'un véhicule est raccordé au générateur. Ce coussin (3) de protection a la forme d'un sac et présente donc une extrémité ouverte et une extrémité fermée. L'extrémité ouverte du coussin (3) présente un pourtour destiné à venir entourer le tube (1,101,201) de manière étanche au niveau de sa section réduite.

Dans un premier mode de réalisation représenté aux figures 1A et 1B, à l'intérieur du tube (1), sur sa paroi (20) interne, à partir du changement (12) de section du tube (1), sur une partie de la longueur L de la section réduite du tube est fixée une tuyère (4) interne.

Cette tuyère (4) interne est par exemple fixée par sertissage sur la paroi (20) interne du tube (1). Elle est constituée par une pièce présentant un canal (40) central dont l'axe est sensiblement confondu avec l'axe (A) du tube (1). Ce canal (40) central a une forme déterminée de sorte qu'il définit dans le tube (1), en suivant le sens d'écoulement donné par la flèche f1, une section d'écoulement décroissante jusqu'à l'extrémité de la pièce où la section d'écoulement est minimale de diamètre D1 non nul. La pièce formant cette tuyère (4) a la forme d'un tronc de cône présentant le canal central (40) dont l'axe est confondu avec l'axe de symétrie du tronc de cône. Ce tronc de cône est ouvert à ses deux extrémités, et est d'épaisseur e variable, décroissante de l'amont vers l'aval. Ce tronc de cône présente sur une portion de sa paroi latérale (41) située à proximité de son extrémité la plus en amont, sur toute sa périphérie, un méplat (42) saillant dont la surface est parallèle à la paroi interne (20) du tube (1) et fixée à celle-ci.

Sensiblement dans le plan radial comportant l'extrémité la plus en aval de la tuyère (4), cette extrémité comportant la section minimale de diamètre D1 du canal (40) central de la tuyère (4), la paroi interne (20) du tube (1) présente un profil particulier consistant en un accroissement (11) important de l'épaisseur de la paroi (2) latérale dans le tube (1) et donc en la réduction de la section d'écoulement dans le tube (1) au niveau de ce plan radial. Cette dernière section d'écoulement a un diamètre D2 supérieur à la somme du diamètre D1 de la section minimale et de deux fois l'épaisseur e de la tuyère (4) dans ce plan radial.

En suivant le sens d'écoulement, le tube (1) présente ensuite une section d'écoulement croissante (13) sur une certaine longueur puis constante (14) jusqu'à la section extrême (8) fermée du tube (1). Cette section d'écoulement constante a un diamètre D3 inférieur au diamètre D4 de la section d'écoulement dans le tube prise au niveau de la section réduite du tube (1).

La différence entre le diamètre D2 de la section d'écoulement prise au niveau de l'accroissement (11) d'épaisseur de la paroi latérale (2) du tube (1) et la somme du diamètre D1 de la section minimale avec deux fois l'épaisseur e de la pièce (4) dans le plan radial défini ci-dessus forme une ouverture vers un passage (5) annulaire. Ce passage (5) annulaire est formé entre la surface de la paroi latérale (41) de la pièce (4) en tronc de cône et la section du tube (1), formée dans ce plan radial par l'accroissement (11) de l'épaisseur de la paroi latérale (2) du tube (1).

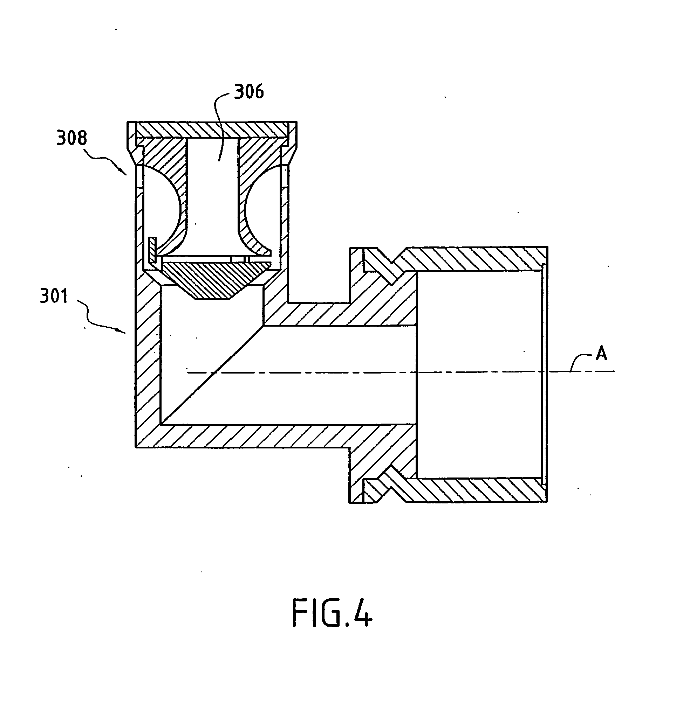

Dans la paroi latérale (2) du tube (1) est formée longitudinalement par rapport à l'axe (A) du tube (1) au moins une tuyère (6) traversant à une de ses extrémités la section extrême (8) aval du tube (1) pour déboucher à l'extérieur du tube (1), dans le coussin lorsque celui-ci est en place, l'autre extrémité de cette tuyère (4) débouchant dans le passage (5) annulaire. Cette tuyère (6) est dite axiale car elle constitue un moyen de sortie axiale des gaz en direction du coussin (3) de protection lorsque celui-ci est en place. L'axe tel que défini ici ne correspond donc pas forcément à l'axe (A) du tube mais correspond à l'axe d'entrée des gaz dans le coussin de protection. Ce principe est illustré à la figure 4 sur laquelle l'embout (308) servant de raccord au coussin de protection est par exemple orienté à 90° par rapport à l'axe (A) du tube (301), de sorte que la sortie (306) axiale des gaz en direction du coussin est également orientée à 90°C par rapport à l'axe (A) du tube (301). Sur la coupe représentée en figures 1A et 1B, apparaît une seule tuyère axiale. Toutefois, il existe d'autres tuyères axiales (6) débouchant dans le passage (5) annulaire.

Au niveau de la section d'écoulement constante (14) de diamètre D3, des tuyères (7) dites radiales sont formées à travers la paroi latérale (2) du tube (1). Ces tuyères (7) sont réparties sur la paroi latérale (2) du tube (1) de sorte à ce que les forces résultant de la sortie des gaz à travers ces tuyères, s'annulent.

La section d'écoulement décroissante formée par la tuyère (4), prolongée par la section d'écoulement croissante (13) du tube (1), forme ainsi un système à effet Venturi. L'effet Venturi crée une accélération des gaz au niveau du rétrécissement formé par la section d'écoulement minimale de diamètre D1.

En référence à la figure 1A, lorsque le générateur est initié et qu'il n'est pas en service, les gaz accélèrent au niveau de ce rétrécissement. Cette accélération amène les gaz directement vers les tuyères radiales (7) comme schématisé par les flèches f2 sur la figure 1A. Dans cette configuration, l'ouverture vers le passage (5) annulaire menant aux tuyères axiales (6) n'étant pas sur le chemin des gaz, ces derniers ne s'évacuent pas par les tuyères axiales (6). Ainsi aucune poussée axiale n'est créée lorsque le générateur est initié alors qu'il n'est pas en service. L'utilisation du système à effet Venturi permet donc de limiter les dangers liés à l'initiation du générateur alors qu'il est hors de son module.

En référence à la figure 1B, lorsque le générateur est en service, le pourtour du coussin gonflable (3) vient obturer les tuyères radiales (7) ce qui empêche la sortie des gaz par les tuyères radiales (7). Dans cette configuration, les gaz ne pouvant s'échapper par les tuyères radiales (7) obturées, passent par le passage (5) annulaire pour rejoindre les tuyères axiales (6) formées dans la paroi latérale (2) du tube (1) et ainsi parvenir dans le coussin (3) de protection gonflable, comme représenté par les flèches f3 sur la figure 1B. Pour bien obturer les tuyères radiales (7), le pourtour de l'extrémité ouverte du coussin (3) est maintenu à l'aide d'un collier (9) de serrage entourant le tube (1).

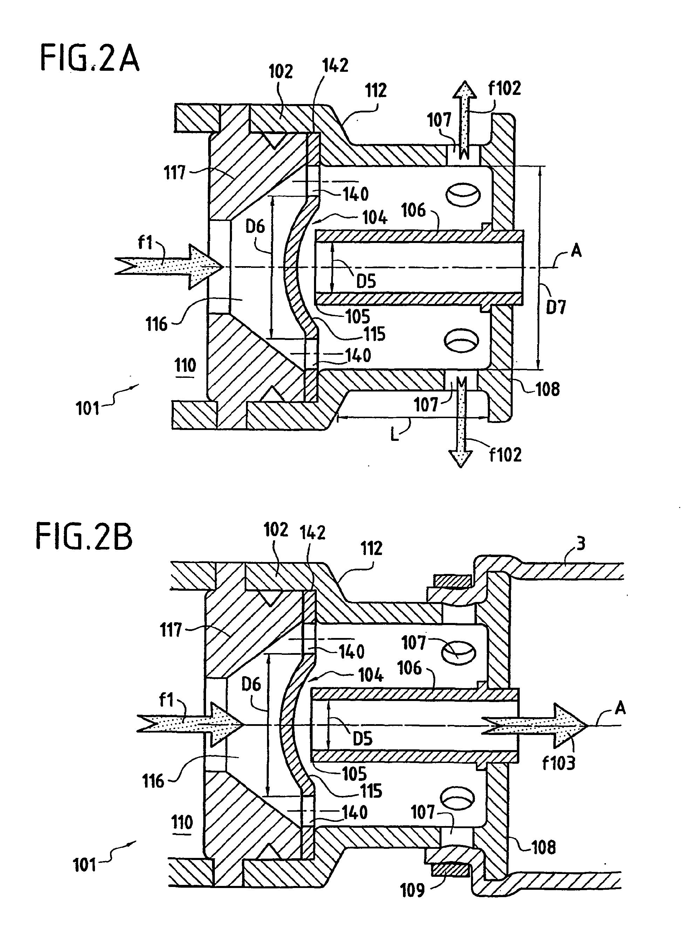

Dans un second mode de réalisation représentée aux figures 2A à 3B, la section (108,208) extrême fermée du tube (101,201) est traversée sensiblement en son centre par un conduit (106,206) dont l'axe est sensiblement confondu avec l'axe (A) du tube (101,201) et qui constitue ainsi une sortie axiale des gaz en direction du coussin (103,203) de protection lorsque celui-ci est raccordé. Ce conduit (106,206) comporte une première extrémité débouchant à l'extérieur du tube (101,201), dans le coussin de protection lorsqu'il est en place, et dite sortie et une seconde extrémité (105,205) débouchant à l'intérieur du tube (101,201) et dite entrée. L'entrée (105,205) du conduit (106,206) se situe sensiblement au niveau du changement (112,212) de section du tube (1) décrit ci-dessus.

Dans une première variante de ce second mode de réalisation, représentée aux figures 2A et 2B, devant l'entrée (105) du conduit (106) est placé un déflecteur (104) comportant une partie centrale (115) circulaire pleine et bombée dont la courbure est orientée vers l'amont du tube (101). De part et d'autre de cette partie centrale (115), sont formés sur le déflecteur (104) deux orifices (140) dont les axes sont sensiblement parallèles à l'axe (A) du tube (101). Ce déflecteur (104) est fixé par son pourtour (142) sur la paroi interne (120) du tube (1) juste en amont du changement de section (112) du tube (101). La partie centrale (115) pleine du déflecteur (104) est placée devant l'entrée (105) du conduit (160). Le diamètre D6 de cette partie centrale pleine, délimitée par les orifices (140) est supérieur au diamètre du conduit (106) à son entrée (105) , défini par D5 sur les figures 2A et 2B. Le rayon de courbure du bombage de la partie centrale (115) du déflecteur (104) est suffisant de sorte à laisser un espace entre l'entrée (105) du conduit (106) et la partie centrale (115) du déflecteur (104).

Juste en amont du déflecteur (104) est placée une pièce cylindrique (117). Cette pièce (110) est fixée par sa périphérie sur la paroi interne (120) du tube (101). Cette pièce (117) présente un canal central (116) ayant une forme tronconique, dont l'axe de symétrie est sensiblement confondu avec l'axe (A) du tube (101), cette forme tronconique créant ainsi dans le tube (101) une modification de la section d'écoulement. Ce canal (116) en tronc de cône est orienté de sorte que la section d'écoulement la plus petite soit la plus en amont. La section d'écoulement la plus grande de ce canal (116) central a un diamètre D7 déterminé de sorte à être égal ou supérieur à la somme du diamètre D6 de la partie centrale (115) du déflecteur (104) et du diamètre de chaque orifice (140) du déflecteur (104). Selon cette variante, à travers la paroi latérale (102) du tube (101), en aval du changement (112) de section du tube (101) sont formés radialement des orifices ou tuyères (107). Celles-ci sont réparties de sorte à donner au générateur une configuration à poussée neutre lorsqu'il est initié hors de son module. Ces orifices ou tuyères (107) peuvent être obturés comme dans la première variante décrite en référence aux figures 1A et 1B par le pourtour du coussin (3) de protection.

La partie centrale (115) du déflecteur (104) ainsi que la forme en tronc de cône du canal (116) central de la pièce (117) située en amont, dévient et guident les gaz vers les orifices (140) du déflecteur (104).

Au niveau des orifices (140), les gaz accélèrent du fait de l'effet Venturi créé par le rétrécissement formé par ces orifices. En accélérant, les gaz se répandent autour du conduit (106) pour se diriger vers les tuyères (107) radiales, comme indiqué par les flèches f102 sur la figure 2A. Si le générateur n'est pas en service, c'est-à-dire hors de son module, les gaz s'échappent par ces tuyères radiales (107) créant ainsi une poussée neutre du fait de la répartition équilibrée des tuyères radiales (107). Si ces tuyères radiales (107) sont obturées, par exemple par le pourtour de l'extrémité ouverte du coussin (3), comme décrit ci-dessus, les gaz ne peuvent plus passer que par l'espace existant entre la partie centrale du déflecteur (104) et l'entrée (105) du conduit (106) pour ainsi rejoindre le conduit (106) et être évacué dans le coussin (3) de protection comme indiqué par la flèche f103 sur la figure 2B. Pour bien obturer les tuyères radiales (107), le pourtour du coussin (3) de protection est maintenu à l'aide d'un collier (109) de serrage entourant le tube (101).

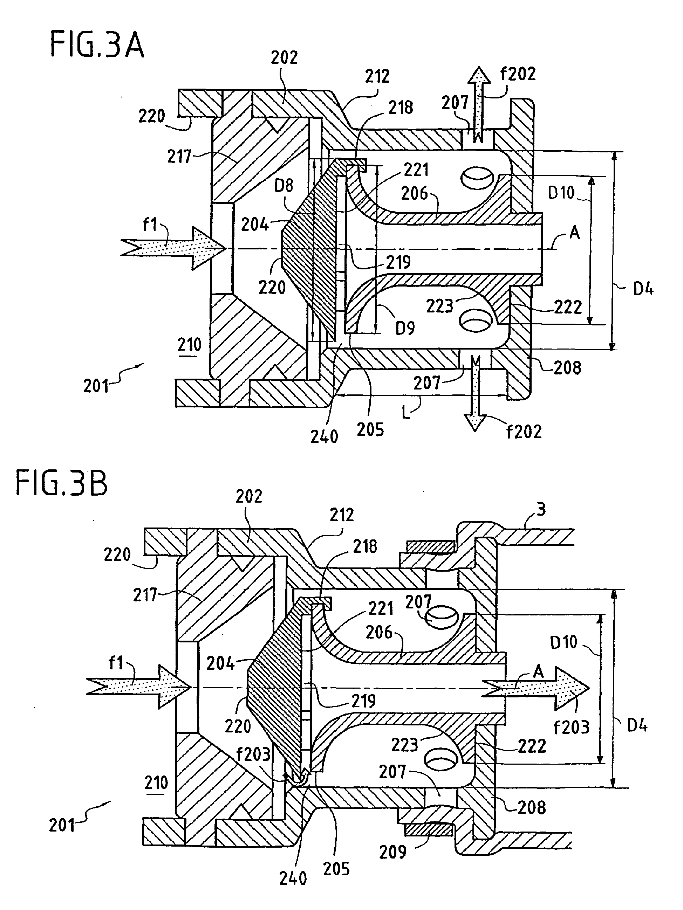

Dans une seconde variante à ce second mode de réalisation, représentée aux figures 3A et 3B, l'entrée (205) du conduit (206) est évasée. Sur le bord évasé de l'entrée (205) du conduit (206), sur une partie de son périmètre, par exemple inférieure à la moitié, est fixé un déflecteur (204). Selon cette variante, ce déflecteur (204) est une pièce tronconique placée de sorte que son axe de symétrie soit sensiblement confondu avec l'axe (A) du tube (201) et l'axe du conduit (206). L'extrémité de plus petite section (220) de cette pièce est située la plus en amont et l'extrémité de plus grande section (221) est situé sensiblement au niveau du changement (212) de section du tube (201). L'extrémité de plus grande section (221) de cette pièce a un diamètre D8 égal ou supérieur au diamètre D9 du conduit (206) pris à son entrée à l'extrémité du bord évasé. L'extrémité de plus grande section (221) a un diamètre D8 inférieur au diamètre interne D4 du tube (201) pris au niveau de la section réduite du tube (201), de sorte que, autour du déflecteur (204), est formé un passage (240) entre l'amont et l'aval du déflecteur (204). Le long d'une partie du périmètre de sa section la plus grande (221), le déflecteur (204) présente une partie (218) saillante lui permettant de s'accrocher sur une partie correspondante du bord évasé de l'entrée (205) du conduit (206). Lorsque le déflecteur (204) est accroché à l'entrée du conduit (206), un espace (219) règne entre le plan constitué par l'entrée (205) du conduit (206) et le plan comprenant l'extrémité de section la plus grande (221) du déflecteur (204). Le conduit (206) comporte également à proximité de sa sortie, une couronne (222) saillante dont une des surfaces latérales vient en appui à l'intérieur du tube (201), contre la section extrême (208) du tube (201). Cette couronne (2,22) a un diamètre D10 inférieur au diamètre D4 interne du tube (201) pris au niveau de sa section réduite, de manière à ne pas obturer les tuyères radiales. Entre la surface latérale opposée à la surface latérale d'appui contre la section extrême (208) du tube (201), est formé un congé (223) tout autour du conduit (206). Le congé pourra permettre par exemple de guider les gaz en direction des tuyères radiales (207). En amont du déflecteur (204) est placée une pièce (217) à canal central identique à celle décrite dans la première variante de réalisation en référence aux figures 2A et 2B.

Selon cette deuxième variante, la forme en tronc de cône du déflecteur (204) permet de dévier et guider les gaz vers le passage (240) existant entre le pourtour (240) du déflecteur (204) et la paroi interne (220) du tube (201). Le passage (240) constitue un rétrécissement de la section d'écoulement dans le tube (201). Lors du passage des gaz au niveau de ce rétrécissement, se crée un effet Venturi, c'est-à-dire une accélération des gaz. Du fait de cette accélération, les gaz se dirigent directement vers les tuyères radiales (207) du tube (201) formées comme dans la première variante de ce second mode. Si ces tuyères radiales (207) ne sont pas obturées, les gaz s'échappent par les tuyères radiales (207) comme indiqué par les flèches f202 sur la figure 3A. Si ces tuyères radiales (207) sont obturées par exemple par le pourtour du coussin (3) de protection maintenu par un collier de serrage (209), les gaz n'ont d'autres solutions que de passer dans l'espace (219) existant entre le déflecteur (204) et l'entrée (205) du conduit (206). Ces gaz s'échappent ensuite directement par le conduit (206) constituant une sortie axiale des gaz en direction du coussin, comme indiqué par la flèche f203 sur la figure 3B. La partie saillante (218) du déflecteur (204), servant d'accroché au déflecteur (204) sur une partie du périmètre du bord évasé du conduit (206), étant pleine, elle peut permettre également de guider les gaz vers l'intérieur du conduit (206).

Selon les deux modes de réalisation décrits ci-dessus, il s'agit bien de l'effet Venturi qui permet de diriger et d'amener les gaz vers les tuyères radiales (7,107,207) et ainsi de rendre le générateur à poussée neutre lorsqu'il n'est pas en service. Lorsque ces tuyères radiales (7,107,207) sont obturées, les gaz n'ont d'autres solutions que de s'échapper de manière axiale en direction du coussin (3), c'est-à-dire par les tuyères axiales (6) dans le premier mode de réalisation ou par le conduit (106,206) dans le second mode de réalisation.

Selon une variante de réalisation, le collier (9,109,209) de serrage pourra par exemple être fusible, de manière à libérer les sorties radiales (7,107,707) du générateur lorsque le module prend feu et ainsi de rendre le générateur à poussée neutre.

Il doit être évident pour les personnes versées dans l'art que la présente invention permet des modes de réalisation sous de nombreuses autres formes spécifiques sans s'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Dispositif générateur de gaz utilisé en sécurité automobile pour gonfler un coussin (3) de protection; comprenant au moins une source de gaz pour gonfler le coussin (3) de protection et au moins un orifice (6,106,206), dit premier orifice, de sortie de gaz vers le coussin (3) de protection, **caractérisé en ce qu'**il comporte des moyens pour amener les gaz à traverser exclusivement d'autres orifices (7,107,207) de sortie des gaz, dits seconds orifices, lorsque le dispositif est initié alors qu'il n'est pas en service, ces seconds orifices (7,107,207) étant distincte dudit premier orifice (6,106,206) et répartis sur le dispositif de sorte à le rendre à poussée neutre lorsqu'il est initié alors qu'il n'est pas en service, le dispositif comportant également des moyens d'obturation de ces seconds orifices lorsque le dispositif est en service, de sorte que lorsque le dispositif est initié, le gaz passe par le premier orifice de sortie.

2. Dispositif selon la revendication 1, **caractérisé en ce qu'**il comprend une première partie comprenant la source de gaz et une deuxième partie ayant la forme d'un tube (1,101,201) cylindrique comprenant un embout sur lequel peut être raccordé le coussin (3) de protection, ce tube (1,101,201) comportant un canal (10,110,210) central ayant un profil interne définissant une section d'écoulement des gaz, dans un sens d'écoulement donné (f1) entre une extrémité dite extrémité amont, reliée à la source de gaz et une extrémité, dite extrémité aval, fermée, constituant une section (8,108,208) pleine extrême du tube (1,101,201), le premier orifice étant formé à travers cette section pleine extrême et le tube (1,101,201) comportant également une paroi latérale (2,102,202) à travers laquelle sont formés radialement les seconds orifices.

3. Dispositif selon la revendication 1 ou la revendication 2, **caractérisé en ce que** les moyens pour amener le gaz à traverser les seconds orifices lorsque le dispositif est initié alors qu'il n'est pas en service sont constitués par un profil interne d'écoulement particulier dans le tube (1), qui comporte, en amont des seconds orifices, en suivant le sens d'écoulement (fl), une section d'écoulement décroissante jusqu'à une section d'écoulement minimale de diamètre (D1) donné non nul formant un rétrécissement, prolongée sensiblement dans le même plan radial, par une section d'écoulement de diamètre (D2) supérieur au diamètre (D1) de la section minimale, elle-même prolongée par une section d'écoulement croissante (13), de sorte à former avec ce profil interne particulier, un système à effet Venturi, la différence entre les deux diamètres (D1, D2) étant définie de sorte à ménager une ouverture vers un passage (5) annulaire relié au premier orifice constitué par une tuyère (6) dite axiale, orientée en direction du coussin (3) de protection, formée longitudinalement dans la paroi latérale (2) du tube (1) et traversant à une de ses extrémités la section (8) extrême du tube (1).

4. Dispositif selon la revendication 3, **caractérisé en ce que** la section décroissante située en amont du rétrécissement est formée par un canal central (40) d'une pièce (4), cette pièce (4) ayant la forme d'un tronc de cône ouvert à ses deux extrémités et ayant une épaisseur (e) déterminée variable, décroissante de son extrémité dite amont située du côté de l'extrémité amont du tube (1) vers son extrémité aval, située du côté de l'extrémité aval du tube (1), cette pièce (4) présentant une paroi latérale (41), sur une partie de laquelle située à proximité de son extrémité amont est formé un méplat (42) circulaire, en saillie, dont la surface est parallèle à la paroi interne (20) du tube (1) et fixée à celle-ci.

5. Dispositif selon la revendication 1 ou la revendication 2, **caractérisé en ce que** les moyens pour amener le gaz vers les seconds orifices comprennent un déflecteur (104,204) placé en vis-à-vis de l'entrée (105,205) d'un conduit (106,206), cette entrée (105,205) constituant une extrémité du conduit (106,206) située à l'intérieur du tube (101,201), le conduit (106,206) traversant à son autre extrémité dite sortie la section extrême (108,208) du tube pour déboucher à l'extérieur du tube (101,201), le déflecteur (104,204) comportant au moins une partie pleine placée en vis-à-vis de l'entrée du conduit (106,206), cette partie pleine étant formée ou située à une distance déterminée de l'entrée du conduit de sorte à laisser un espace entre la partie pleine et l'entrée (105,205) du conduit (106,206), au moins un passage étant formé autour de la partie pleine du déflecteur (104,204), ce passage (140,240) constituant une réduction de la section d'écoulement dans le tube entre l'amont et l'aval.

6. Dispositif selon la revendication 5, **caractérisé en ce que** le déflecteur (104) comporte de part et d'autre de sa partie pleine (115), au moins deux orifices (140) permettant le passage des gaz entre l'amont et l'aval du déflecteur (104).

7. Dispositif selon la revendication 6, **caractérisé en ce que** la partie pleine (115) du déflecteur est bombée en direction de l'amont permettant de former l'espace entre la partie pleine (115) et l'entrée du conduit (106).

8. Dispositif selon la revendication 5, **caractérisé en ce que** le déflecteur (204) a une forme tronconique dont l'axe de symétrie est confondu avec l'axe (A) du tube (201) et avec l'axe du conduit (206), la section la plus grande (221) de cette forme tronconique étant en vis-à-vis de l'entrée (205) du conduit (206) et de diamètre (D8) supérieur ou égal au diamètre (D9) du conduit (206) à son entrée, et inférieur au diamètre interne (D4) du tube (201) à cet endroit de sorte à former le passage (240) entre l'amont et l'aval.

9. Dispositif selon la revendication 8, **caractérisé en ce que** l'entrée (205) du conduit (206) est évasée et **en ce que** le déflecteur (204) présente des moyens d'accrochage sur le bord de l'entrée (205) évasée du conduit (206).

10. Dispositif selon l'une des revendications 2 à 9
**caractérisé en ce que** le coussin (3) de protection gonflable comporte une extrémité ouverte ayant son pourtour raccordé à l'embout, appliqué sur les seconds orifices et maintenu contre eux de sorte à former les moyens d'obturation des seconds orifices lorsque le dispositif est en service.

11. Dispositif selon la revendication 10, **caractérisé en ce que** la liaison du coussin (3) de protection sur l'embout est réalisé à l'aide d'un collier (9,109,209) de serrage.

12. Dispositif selon la revendication 11, **caractérisé en ce que** la liaison du coussin (3) de protection sur l'embout, réalisée par l'intermédiaire d'un collier (9,109,209) de serrage, est fusible, ce qui permet dans le cadre d'une prise en feu du dispositif, de libérer les seconds orifices et ainsi de conférer au dispositif une configuration à poussée neutre.

13. Dispositif selon l'une des revendications 1 à 12, **caractérisé en ce que** la source de gaz comporte un réservoir relié ou intégré au tube (1,101) et contenant un gaz sous-pression.

14. Dispositif selon l'une des revendications 1 à 13, **caractérisé en ce que** la source de gaz comporte une chambre de combustion d'au moins un chargement pyrotechnique.

## Claims

1. A gas generator device used in automobile safety to inflate an airbag (3) , comprising at least one gas source for inflating the airbag (3) and at least one gas outlet orifice (6, 106, 206), called the first orifice, for gas to flow out into the airbag (3), **characterized in that** it includes means for making the gas pass exclusively through other gas outlet orifices (7, 107, 207), called second orifices, when the device is initiated although not in service, these second orifices (7, 107, 207) being separate from said first orifice (6, 106, 206) and distributed over the device so as to render it with a neutral thrust configuration when it is initiated, although not in service, the device also including means for closing off these second orifices when the device is in service, so that when the device is initiated the gas passes via the first outlet orifice.

2. The device as claimed in claim 1,
**characterized in that** it comprises a first portion comprising the gas source and a second portion having the shape of a cylindrical tube (1, 101, 201) that includes a ferrule onto which the airbag (3) can be fitted, this tube (1, 101, 201) comprising a central channel (10, 110, 210) having an internal profile that defines a gas outflow section, for outflow in a given flow direction (f1) between one end, called the upstream end, which is connected to the gas source and a closed end, called the downstream end, which constitutes a solid end section (8, 108, 208) of the tube (1, 101, 201), the first orifice being formed through this solid end section and the tube also having a side wall (2, 102, 202) through which the second orifices are formed radially.

3. The device as claimed in claim 1 or 2, **characterized in that** the means for making the gas pass through the second orifices when the device is initiated although not in service, consist of a particular internal profile for flow in the tube (1), which comprises, upstream of the second orifices, along the flow direction (f1), a flow section that decreases down to a minimum flow section of nonzero given diameter (D1) forming a restriction, extended approximately in the same radial plane by a flow section of diameter (D2) greater than the diameter (D1) of the minimum section, which is itself extended by an increasing flow section (13) so as to form, with this particular internal profile, a Venturi-effect system, the difference between the two diameters (D1, D2) being defined so as to leave an opening near an annular passage (5) connected to the first orifice formed by what is called an axial nozzle (6) oriented in the direction of the airbag (3), said nozzle being formed longitudinally in the side wall (2) of the tube (1) and, at one of its ends, passing through the end section (8) of the tube (1).

4. The device as claimed in claim 3, **characterized in that** the decreasing section located upstream of the restriction is formed by a central channel (40) of a part (4), this part (4) having the shape of a truncated cone open at both its ends and having a variable defined thickness (e), which decreases from its upstream end, located on the same side as the upstream end of the tube (1), toward its downstream end, located on the same side as the downstream end of the tube (1), this part (4) having a side wall (41), on a portion of which is formed, near its upstream end, a projecting circular flat (42), the surface of which is parallel to the internal wall (20) of the tube (1) and is fastened to said internal wall.

5. The device as claimed in claim 1 or 2, **characterized in that** the means for bringing the gas toward the second orifices comprise a deflector (104, 204) placed so as to face the inlet (105, 205) of a duct (106, 206), this inlet (105, 205) constituting one end of the duct (106, 206) located inside the tube (101, 201), the duct (106, 206), at its other end, called the outlet end, passing through the end section (108, 208) of the tube in order to emerge outside the tube (101, 201), the deflector (104, 204) having at least one solid portion placed facing the inlet of the duct (106, 206), this solid portion being formed or located at a defined distance from the inlet of the duct so as to leave a space between the solid portion and the inlet (105, 205) of the duct (106, 206), at least one passage being formed around the solid portion of the deflector (104, 204), this passage (140, 240) constituting a reduction in the flow section in the tube between the upstream end and the downstream end.

6. The device as claimed in claim 5, **characterized in that** the deflector (104) includes, on either side of its solid portion (115), at least two orifices (140) allowing the gas to pass between the upstream end and the downstream end of the deflector (104).

7. The device as claimed in claim 6, **characterized in that** the solid part (115) of the deflector is domed toward the upstream end, making it possible to form the space between the solid portion (115) and the inlet of the duct (106).

8. The device as claimed in claim 5, **characterized in that** the deflector (204) has a frustoconical shape, the axis of symmetry of which coincides with the axis (A) of the tube (201) and with the axis of the duct (206), the larger section (221) of this frustoconical shape facing the inlet (205) of the duct (206) and having a diameter (D8) greater than or equal to the diameter (D9) of the duct (206) at its inlet, and less than the internal diameter (D4) of the tube (201) at this point, so as to form the passage (240) between the upstream end and the downstream end.

9. The device as claimed in claim 8, **characterized in that** the inlet (205) of the duct (206) is flared and **in that** the deflector (204) has means for catching onto the edge of the flared inlet (205) of the duct (206).

10. The device as claimed in any one of the claims 2 to 9, **characterized in that** the inflatable airbag (3) has an open end with its perimeter fitted to the ferrule, applied to the second orifices and held against them so as to form the means for closing off the second orifices when the device is in service.

11. The device as claimed in claim 10, **characterized in that** the link for joining the airbag (3) onto the ferrule is formed by means of a clamping clip (9, 109, 209).

12. The device as claimed in claim 11, **characterized in that** the link, for joining the airbag (3) onto the ferrule, formed by means of a clamping clip (9, 109, 209), can melt, which makes it possible in the event of firing the device, to release the second orifices and thus give the device a neutral thrust configuration.

13. The device as claimed in any one of the claims 1 to 12, **characterized in that** the gas source comprises a reservoir connected to or integrated with the tube (1, 101) and containing a pressurized gas.

14. The device as claimed in any one of the claims 1 to 13,**characterized in that** the gas source comprises a combustion chamber for burning at least one pyrotechnic charge.

## Patentansprüche

1. Gaserzeugungsvorrichtung, die in der Kraftfahrzeugsicherheit eingesetzt wird, um ein Schutzkissen (3) aufzublasen und die wenigstens eine Gasquelle zum Aufblasen des Schutzkissens (3) umfasst und wenigstens eine Öffnung (6, 106, 206), die erste Öffnung genannt wird, für den Gasaustritt zum Schutzkissen (3), **dadurch gekennzeichnet, dass** sie Mittel umfasst, um die Gase ausschließlich durch andere Gasaustrittsöffnungen (7, 107, 207), die zweite Öffnungen genannt werden, zu führen, falls die Vorrichtung ausgelöst wird, während sie nicht in Betrieb ist, wobei diese zweiten Öffnungen (7, 107, 207) von der ersten Öffnung (6, 106, 206) verschieden und auf der Vorrichtung derart verteilt sind, dass sie den Stoß neutral machen falls sie ausgelöst wird, während sie nicht in Betrieb ist, wobei die Vorrichtung ebenfalls Mittel zum Verschließen dieser zweiten Öffnungen, wenn die Vorrichtung in Betrieb ist, umfasst, derart, dass wenn die Vorrichtung ausgelöst wird, das Gas durch die erste Austrittsöffnung hindurch geht.

2. Vorrichtung nach Anspruch 1, **dadurch gekennzeichnet, dass** sie einen ersten Teil umfasst, der die Gasquelle umfasst, und einen zweiten Teil mit der Form einer zylindrischen Röhre (1, 101, 201), der ein Anschlussstück umfasst, an das das Schutzkissen (3) angeschlossen werden kann, wobei diese Röhre (1, 101, 201) einen zentralen Kanal (10, 110, 210) umfasst, der ein Innenprofil hat, das einen Querschnitt zum Strömen der Gase definiert, und dies in einer gegebenen Strömungsrichtung (f1) zwischen einem Ende, das stromauf gelegenes Ende genannt wird und das mit der Gasquelle verbunden ist, und einem verschlossenen Ende, das stromab gelegenes Ende genannt wird und das einen vollen Endquerschnitt (8, 108, 208) der Röhre (1, 101, 201) bildet, wobei die erste Öffnung durch diesen vollen Endquerschnitt hindurch ausgebildet ist und wobei die Röhre (1, 101, 201) ebenfalls eine Seitenwand (2, 102, 202) umfasst, durch die hindurch radial die zweiten Öffnungen ausgebildet sind.

3. Vorrichtung nach Anspruch 1 oder Anspruch 2, **dadurch gekennzeichnet, dass** die Mittel um das Gas durch die zweiten Öffnungen zu führen, falls die Vorrichtung ausgelöst wird, während sie nicht in Betrieb ist, durch ein spezielles Strömungsinnenprofil in der Röhre (1) gebildet werden, das stromauf von den zweiten Öffnungen einen Strömungsquerschnitt umfasst, der in Strömungsrichtung (f1) abnimmt bis auf einen minimalen Strömungsquerschnitt mit einem gegebenen nicht verschwindenden Durchmesser (D1), der eine Engstelle bildet, die im wesentlichen in derselben radialen Ebene durch einen Strömungsquerschnitt verlängert wird, der einen Durchmesser (D2) hat, der größer als der Durchmesser (D1) des minimalen Querschnitts ist, wobei er selber durch einen zunehmenden Strömungsquerschnitt (13) auf solche Weise verlängert wird, dass er zusammen mit diesem speziellen Innenprofil ein System mit Venturi-Effekt bildet, wobei die Differenz zwischen den beiden Durchmessern (D1, D2) so definiert ist, dass eine Öffnung zu einem ringförmigen Durchgang (5) ausgebildet wird, die mit der ersten Öffnung verbunden ist, die durch eine als axial bezeichnete Düse (6) gebildet wird, die in Richtung des Schutzkissens (3) ausgerichtet ist, die in Längsrichtung in der Seitenwand (2) der Röhre (1) ausgebildet ist und die an einem ihrer Enden den Endquerschnitt (8) der Röhre (1) durchstößt.

4. Vorrichtung nach Anspruch 3, **dadurch gekennzeichnet, dass** der abnehmende Querschnitt, der sich stromauf von der Engstelle befindet, durch einen zentralen Kanal (40) eines Teils (4) gebildet wird, wobei dieses Teil (4) die Form eines an seinen beiden Enden offenen Kegelstumpfs hat und eine bestimmte variable Dicke (e) hat, die von seinem als stromauf bezeichneten Ende, das sich auf der Seite des stromauf gelegenen Endes der Röhre (1) befindet, zu seinem stromab gelegenen Ende, das sich auf der Seite des stromab gelegenen Endes der Röhre (1) befindet, hin abnimmt, wobei dieses Teil (4) eine Seitenwand (41) hat, wobei auf einem Abschnitt von dieser, der sich in der Nähe seines stromauf gelegenen Endes befindet, eine hervorstehende kreisförmige Abflachung (42) ausgebildet ist, deren Oberfläche parallel zur Innenwand (20) der Röhre (1) und an dieser befestigt ist.

5. Vorrichtung nach Anspruch 1 oder Anspruch 2, **dadurch gekennzeichnet, dass** die Mittel um das Gas zu den zweiten Öffnungen zu führen einen Deflektor (104, 204) umfassen, der gegenüberliegend vom Eingang (105, 205) eines Gangs (106, 206) angeordnet ist, wobei dieser Eingang (105, 205) ein Ende des Gangs (106, 206) bildet, das sich im Inneren der Röhre (101, 201) befindet, und wobei der Gang (106, 206) an seinem anderen Ende, das Ausgangsende genannt wird, den Endquerschnitt (108, 208) der Röhre durchstößt, um auf der Außenseite der Röhre (101, 201) zu münden, wobei der Deflektor (104, 204) wenigstens einen vollen Abschnitt umfasst, der gegenüber des Eingangs des Gangs (106, 206) angeordnet ist, und wobei dieser volle Abschnitt in einem bestimmten Abstand vom Eingang des Gangs ausgebildet oder angeordnet ist, derart, dass zwischen dem vollen Abschnitt und dem Eingang (105, 205) des Gangs (106, 206) Raum gelassen wird, wobei wenigstens ein Durchgang um den vollen Abschnitt des Deflektors (104, 204) gebildet wird, wobei dieser Durchgang (140, 240) eine Verringerung des Strömungsquerschnitts in der Röhre zwischen dem stromauf gelegenen Ende und dem stromab gelegenen Ende bildet.

6. Vorrichtung nach Anspruch 5, **dadurch gekennzeichnet, dass** der Deflektor (104) auf beiden Seiten seines vollen Abschnitts (115) wenigstens zwei Öffnungen (140) umfasst, die den Durchgang der Gase zwischen dem stromauf gelegenen Ende und dem stromab gelegenen Ende des Deflektors (104) gestatten.

7. Vorrichtung nach Anspruch 6, **dadurch gekennzeichnet, dass** der volle Abschnitts (115) des Deflektors in die stromauf zeigende Richtung gewölbt ist, was es gestattet, den Raum zwischen dem vollen Abschnitt (115) und dem Eingang des Gangs (106) zu bilden.

8. Vorrichtung nach Anspruch 5, **dadurch gekennzeichnet, dass** der Deflektor (204) eine Kegelstumpfform hat, deren Symmetrieachse mit der Achse (A) der Röhre (201) und mit der Achse des Gangs (206) zusammenfällt, wobei der größte Querschnitt (221) dieser Kegelstumpfform gegenüber des Eingangs (205) des Gangs (206) liegt und einen Durchmesser (D8) hat, der größer oder gleich dem Durchmesser (D9) des Gangs (206) an seinem Eingang ist und der kleiner als der Innendurchmesser (D4) der Röhre (201) an dieser Stelle ist, derart, dass der Durchgang (240) zwischen dem stromauf gelegenen Ende und dem stromab gelegenen Ende gebildet wird.

9. Vorrichtung nach Anspruch 8, **dadurch gekennzeichnet, dass** der Eingang (205) des Gangs (206) verbreitert ist und **dadurch**, dass der Deflektor (204) Mittel zum Ankuppeln am Rand des verbreiterten Eingangs (205) des Gangs (206) hat.

10. Vorrichtung nach einem der Ansprüche 2 bis 9, **dadurch gekennzeichnet, dass** das aufblasbare Schutzkissen (3) ein offenes Ende hat, dessen Umfang an das Anschlussstück angeschlossen wird, wobei es auf die zweiten Öffnungen aufgesetzt wird und so gegen sie drückt, dass die Mittel zum Verschluss der zweiten Öffnungen gebildet werden, wenn die Vorrichtung in Betrieb ist.

11. Vorrichtung nach Anspruch 10, **dadurch gekennzeichnet, dass** die Verbindung des Schutzkissens (3) auf dem Anschlussstück mittels eines Spannrings (9, 109, 209) realisiert wird.

12. Vorrichtung nach Anspruch 11, **dadurch gekennzeichnet, dass** die Verbindung des Schutzkissens (3) auf dem Anschlussstück, die mittels eines Spannrings (9, 109, 209) realisiert ist, schmelzbar ist, was es gestattet, bei einem Vorfall, bei dem die Vorrichtung Feuer fängt, die zweiten Öffnungen freizugeben und damit der Vorrichtung eine Konfiguration mit neutralem Stoß zu geben.

13. Vorrichtung nach einem der Ansprüche 1 bis 12, **dadurch gekennzeichnet, dass** die Gasquelle einen Tank umfasst, der mit der Röhre (1, 101) verbunden oder in diese integriert ist und der ein Gas unter Druck enthält.

14. Vorrichtung nach einem der Ansprüche 1 bis 13, **dadurch gekennzeichnet, dass** die Gasquelle eine Verbrennungskammer mit wenigstens einer pyrotechnischen Ladung umfasst.
